# EUROPEAN PATENT APPLICATION

(11) **EP 1 918 389 A1**
(43) Date of publication of application: **07.05.2008**
(21) Application number: 06781540.7
(22) Date of filing: 25.07.2006
(51) Int. Cl.: C22C 1/04, B22F 1/00, B22F 3/20, C22C 1/05, C22C 9/01, C22C 9/04

(54) **COPPER ALLOY EXTRUDED MATERIAL AND METHOD FOR PRODUCING SAME**

(30) Priority: 28.07.2005 JP 2005219151
(71) Applicant: San-Etsu Metals Co., Ltd, Takaoka-shi, Toyama 9330002 (JP)
(72) Inventor: KOSAKA, Yoshiharu, Tonami-shi, Toyama 939-1315 (JP); OKUYAMA, Masanori, Tonami-shi, Toyama 939-1315 (JP); KOJIMA, Akimichi, Tonami-shi, Toyama 939-1315 (JP); KONDOH, Katsuyoshi, Minoh-shi, Osaka 562-0043 (JP)
(74) Representative: Kirschner, Klaus Dieter
(86) International application number: PCT/JP2006/314628
(87) International publication number: WO 2007/013428

(57) **Abstract**

A copper alloy extruded material is provided by extruding a copper alloy powder solidified billet and old grain boundaries remain in it.

## Description

The present invention relates to a free-machining and high-strength copper alloy extruded material.

While a copper alloy has been widely used for a car component, electronic part, plumbing member (faucet fitting and valve) and the like, it is important to enhance and improve both machinability (machining characteristics) and strength of the copper alloy in view of further expansion of applicable products and increase of its market share.

In general, it has been known that the machinability of the copper alloy can be effectively improved by the addition of lead. The copper alloy containing such lead includes a bronze alloy such as JIS H5111 BC6 and a brass alloy such as JIS H3250-C3604 and C3771.

However, there is a risk that a worker may suck in lead or cadmium in metal vapor generated at the time of melting or casting the copper alloy containing lead or cadmium that adversely affects the human body and environment, and a human may drink lead when such copper alloy is used for the faucet fitting or valve and lead element dissolves in drinking water.

In order to prevent lead or cadmium from dissolving from the copper alloy in such usage process, a method of removing lead on the surface previously is disclosed in Japanese Unexamined Patent Publication No. 2000-96268 and Japanese Unexamined Patent Publication No. 2000-96269. However, since lead could appear on the surface due to the abrasion or damage of a surface layer in the usage process, the above method cannot prevent a lead dissolving phenomenon completely.

On the other hand, a non-leaded free-machining copper alloy that does not contain lead or cadmium at all is disclosed in Japanese Unexamined Patent Publication No. 2000-119775, for example. According to this document, a copper alloy having a tensile strength of 600 to 800MPa is proposed, and silicon (Si) that is an additive element improves the machinability of the copper alloy by producing a γ phase. However, the problem is that since silicon is harder than copper and lead in the base, its cutting resistance is increased as compared with the lead-containing brass alloy such as JIS H3250-C3604 and C3771 and a tool life becomes short.

As a method of improving the machinability and cutting performance, there is a report on adding graphite powder particle to a brass alloy in "Copper and Copper Alloy, Vol. 42, No. 1, p.223-228, 2003" for example. Here, 3% by weight of graphite powder particle is added to a molten brass alloy, stirred, cast in a die and extruded, whereby a brass alloy extruded material is manufactured. As described in this report, since the specific gravity of graphite is as small as about 1/6 of copper alloy, even when it is well-stirred, the graphite particles float and segregate at the time of casting. Therefore, a part in which graphite particle exists partially and a part in which there is no graphite particle are mixed in a cast ingot material. As a result, it has been reported that the graphite particles are dispersed like a tree ring in the section of the extruded material manufactured from that ingot and the machinability (the shape of cut debris) of the brass alloy largely differs depending on the place. In addition, there are many defects (cavity) at a surface layer part due to segregation and aggregation of the graphite particles, which lowers the mechanical characteristics of the brass material.

It is desirable to develop a copper alloy having stable high free-machining properties and superior mechanical characteristics (high strength especially) by selecting a machinability improvement element to be replaced with lead and cadmium that could adversely affect the environment and the human body and adding the element so as to be uniformly dispersed in the alloy. Especially, in order to implement both free-machining properties and high strength of the copper alloy, it is important to disperse the machinability improvement element in the alloy uniformly when the element is added in the copper alloy.

It is an object of the present invention to provide a high free-machining copper alloy extruded material.

It is another object of the present invention to provide a copper alloy extruded material in which an appropriate amount of machinability improvement element is uniformly dispersed.

It is still another object of the present invention to provide a copper alloy extruded material implementing both stable high free-machining properties and superior mechanical characteristics.

It is still another object of the present invention to provide a high free-machining copper alloy extruded material containing no lead and no cadmium that adversely affects the human body and the environment.

It is still another object of the present invention to provide a copper alloy billet to obtain the above copper alloy extruded material.

It is still another object of the present invention to provide a copper alloy member provided by drawing or hot casting the above copper alloy extruded material.

It is still another object of the present invention to provide a method of manufacturing a high free-machining copper alloy extruded material.

A copper alloy extruded material according to the present invention is provided by extruding a copper alloy powder solidified billet, and characterized in that old grain boundaries remain in the inside.

According to one embodiment, the copper alloy extruded material contains 0.1% to 3% by weight of at least one kind of powder particle selected from a group consisting of graphite, boron nitride, molybdenum disulfide, copper sulfide and calcium fluoride in a matrix when it is assumed that the whole copper alloy extruded material is 100% by weight. More preferably, the copper alloy extruded material contains 0.3% to 1% by weight of at least one kind of powder particle selected from a group consisting of graphite, boron nitride, molybdenum disulfide, copper sulfide and calcium fluoride in a matrix when it is assumed that the whole copper alloy extruded material is 100% by weight.

According to the copper alloy extruded material in one embodiment, a copper alloy constituting a matrix contains 77 to 88% by weight of copper, 8.5 to 12% by weight of aluminum, 0.5 to 5.5% by weight of nickel, 2 to 5% by weight of iron, 0.5 to 2% by weight of manganese, and the balance of zinc when it is assumed that the whole copper alloy constituting the matrix is 100% by weight.

According to the copper alloy extruded material in another embodiment, a copper alloy constituting a matrix contains 69 to 80% by weight of copper and 1.8 to 3.5% by weight of silicon, and containing one or more kinds of elements selected from a group consisting of 0.3 to 3.5% by weight of tin, 1 to 3.5% by weight of aluminum, and 0.02 to 0.25% by weight of phosphorous, and the balance of zinc when it is assumed that the whole copper alloy constituting the matrix is 100% by weight.

According to the copper alloy extruded material in still another embodiment, a copper alloy constituting a matrix contains 26 to 32% by weight of zinc, 0.5 to 1.5% by weight of silicon, 3 to 4.5% by weight of aluminum, 0.5 to 1.5% by weight of iron, 2 to 4.5% by weight of nickel and the balance of copper when it is assumed that the whole copper alloy constituting the matrix is 100% by weight.

According to the copper alloy extruded material in still another embodiment, a copper alloy constituting a matrix contains 55 to 65% by weight of copper, 0.2 to 7.5% by weight of aluminum, 0.1 to 4% by weight of iron, 0.5 to 5% by weight of manganese, and the balance of zinc when it is assumed that the whole copper alloy constituting the matrix is 100% by weight.

According to the copper alloy extruded material in still another embodiment, a copper alloy constituting a matrix contains 55 to 64% by weight of copper, 0.1 to 0.7% by weight of iron, 0.2 to 2.5% by weight of tin, and the balance of zinc when it is assumed that the whole copper alloy constituting the matrix is 100% by weight.

A copper alloy constituting a matrix may further contain one or more kinds of elements selected from a group consisting of 0.1 to 1.5% by weight of titanium, 0.1 to 1.5% by weight of chrome, and 0.1 to 1.5% by weight of cobalt.

A copper alloy constituting a matrix may further contain one or more kinds of elements selected from a group consisting of 0.02 to 4% by weight of bismuth, 0.02 to 0.4% by weight of tellurium, 0.02 to 0.4% by weight of selenium, and 0.02 to 0.15% by weight of antimony.

The grain diameter of the powder particle is 5 µm to 300 µm, for example. Preferably, the powder particles are distributed along old grain boundaries.

The copper alloy extruded material according to still another embodiment contains 0.3 to 4% by weight of lead when it is assumed that the whole copper alloy extruded material is 100% by weight.

A copper alloy extruding billet according to the present invention is for obtaining the copper alloy extruded material described above, and it is manufactured by compacting and molding copper alloy powder.

A copper alloy member according to the present invention is provided by drawing or hot casting the copper alloy extruded material described above.

A manufacturing method of a copper alloy extruded material according to the present invention comprises a step of compacting copper alloy powder to manufacture a copper alloy powder solidified billet, and a step of extruding the billet to manufacture an extruded material.

According to the manufacturing method, an extrusion ratio of the extruding step is 20 to 500, for example.

The manufacturing method according to one embodiment comprises a step of adding and mixing at least one kind of powder particle selected from a group consisting of graphite, boron nitride, molybdenum disulfide, copper sulfide and calcium fluoride in the copper alloy powder prior to the compacting step. In this case, the additive amount of the powder particle is preferably 0.1 to 3% by weight, to 100% by weight of the copper alloy powder.

The grain diameter of the powder particle is 5 µm to 300 µm, for example.

According to the manufacturing method, the billet is heated at temperature within a range of 400°C to 800°C to perform the extruding step, for example.

Embodiments of the invention are now described with reference to the drawings.
Fig. 1 is photographs showing the shapes of various kinds of cut powder;
Fig. 2 is illustrations showing a part of the photographs shown in Fig. 1;
Fig. 3 is texture photographs showing a copper alloy powder solidified billet and a cast copper alloy billet;
Fig. 4 is texture photographs in which lines showing old grain boundaries are added to the texture photograph shown in Fig. 3; and
Fig. 5 is a view schematically showing a drilling machine.

The inventors propose a high-strength copper alloy extruded material having superior machinability and its manufacturing method. More specifically, graphite, boron nitride, molybdenum disulfide, copper sulfide, and calcium fluoride are selected as machinability improvement elements as alternatives to lead, and at least one kind of these elements is added by an appropriate amount and mixed in a copper alloy powder having a predetermined alloy content and the mixed powder is solidified and extruded to attain the object of the present invention. Especially, as a method to solve the conventional problem of segregation and separation between the machinability improvement element having a low specific gravity and the copper alloy in a melting and casting step, when both powder particles are solidified and extruded without being melted, the machinability improvement element particles are uniformly dispersed in a copper alloy base, whereby there can be provided a copper alloy extruded material having superior machinability and high strength and toughness.

The present invention and preferred embodiments thereof will be described in detail hereinafter.

The copper alloy powder constituting the base of the copper alloy extruded material according to the present invention and the machinability improvement element particle to be described below are mixed and poured into a die or mold and then pressurized, whereby a copper alloy powder solidified billet to be extruded is manufactured. Then, this billet is heated and densely solidified by extruding immediately. As a result, a structure in which old grain boundaries corresponding to the copper alloy powder as a starting material remain in the provided copper alloy extruded material is provided. The inventors have found that such structure can be implemented and controlled by performing hot plastic working on the copper alloy powder solidified billet under an appropriate extrusion ratio.

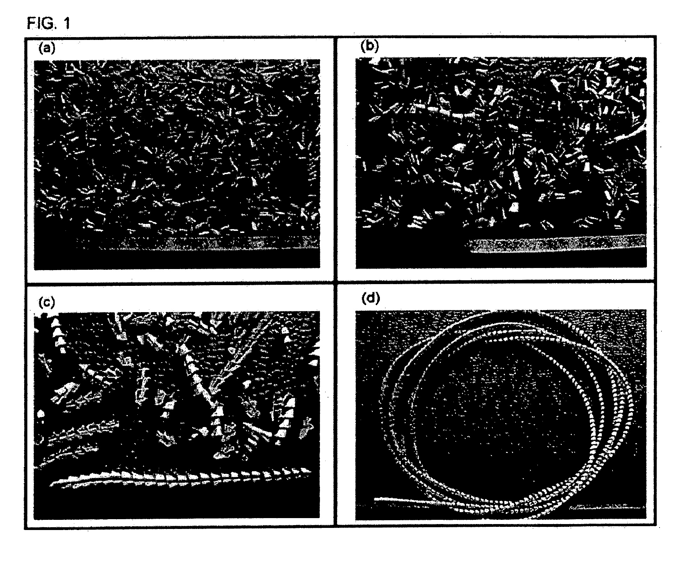

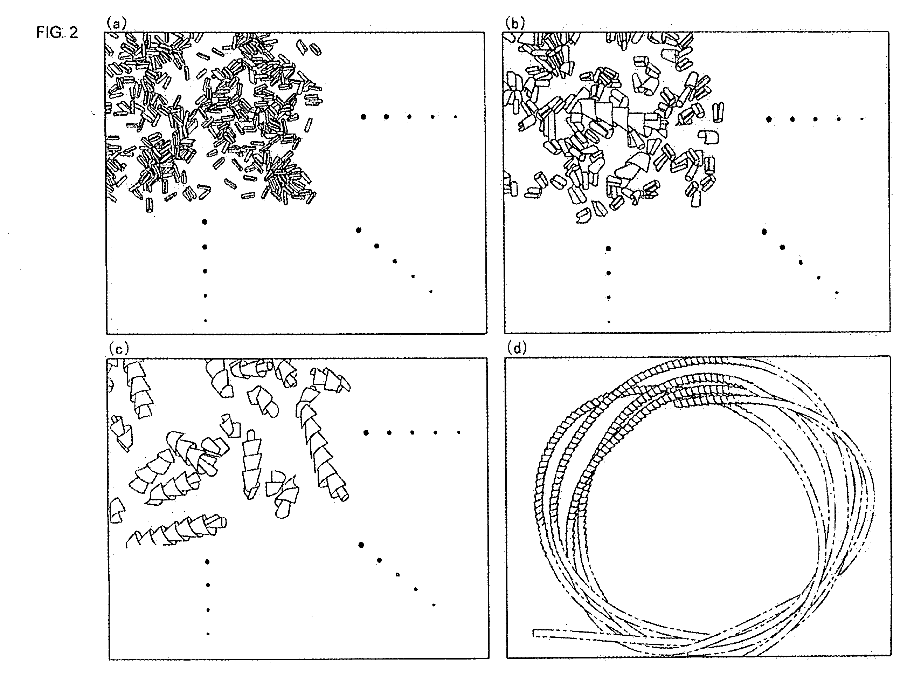

Fig. 1 is photographs showing the shapes of cut powder (cut debris) provided by cutting several kinds of copper alloy extruded materials. In addition, Fig. 2 illustrates a part of the photographs of the cut powder in Fig. 1 and (a), (b), (c) and (d) of Fig. 2 correspond to (a), (b), (c) and (d) of Fig. 1, respectively.

When a copper alloy extruded material obtained from a conventional billet processed by melting and casting is cut, the cut powder (cut debris) has a continuous curled shape as shown in Fig. 1(d) and Fig. 2(d). Meanwhile, according to the present invention, since the old grain boundaries remain in the base as described above, the cut powder (cut debris) processed by cutting does not have the continuous curled shape shown in Fig. 1(d) and Fig. 2(d) but has a relatively short flaked shape as shown in Fig. 1(b) and Fig. 2(b) while maintaining high strength and toughness (elongation). This flaked cut debris can be easily discharged at the time of cutting and attain excellent machinability improvement. That is, the method in which the copper alloy powder solidified billet is extruded under the appropriate extrusion ratio is a new method to improve the machinability of the copper alloy extruded material that is unheard of in the conventional method. Since the old grain boundaries do not exist in the extruded material obtained from the billet manufactured by the conventional melting and casting method, the excellent improved effect of the machinability cannot be provided even when the billet manufactured by melting and casting has the same composition.

Furthermore, when the machinability improvement element particles to be described below are uniformly dispersed in the base of the copper alloy extruded material according to the present invention, the friction resistance (cutting resistance) between a tool and the copper alloy material at the time of cutting can be reduced and at the same time, the dimension of the cut debris shown in Fig. 1(a) and Fig. 2(a) can be further reduced. Therefore, a further machinability improvement effect that a tool life can be long and a cutting time can be short is provided.

Although the particle diameter of the copper alloy powder is not particularly limited, it is preferably about 10 µm to 10mm in view of a filling rate to the die or mold and compacting moldability. When the particle diameter of the copper alloy powder is below 10 µm, the problem is that the powder particle enters the gap of the die to cause burning between the dies and the filling rate is lowered and in addition, the problem is that since a specific surface area is increased, the friction resistance between the copper alloy powder is increased and compacting moldability is lowered to cause the powder solidified billet to be cracked or damaged. Meanwhile, when the particle diameter of the copper alloy powder exceeds 10mm, the filling rate to the die or mold is lowered and the compacting moldability is also lowered.

As for a manufacturing method of the copper alloy powder, a method in which the copper alloy powder is manufactured by atomizing and a method in which a copper alloy ingot having a predetermined alloy composition is manufactured by melting and casting and relatively coarse copper alloy powder and cut debris are manufactured through a cutting and granulating process are effectively used. General cut debris may be molded as a matter of course.

According to the present invention, at least one kind of powder particle selected from a group consisting of graphite, boron nitride, molybdenum disulfide, copper sulfide, and calcium fluoride is selected as the machinability improvement element particle to be replaced with lead and mixed with the above copper alloy powder, and compacted, whereby the powder solidified billet is manufactured. In this case, since the machinability improvement element particle exits between the copper alloy powder, the added machinability improvement element particle exists along the old grain boundaries in the base of the copper alloy extruded material manufactured from the powder solidified billet.

The above machinability improvement element particle has an effect of improving and enhancing the machinability of the copper alloy because it is not solid solution in the copper alloy base but dispersed in the shape of the particle similar to lead. Especially, since the graphite powder is inexpensive, it is advantageous in view of an economical aspect. The graphite powder may be natural graphite or artificial graphite, and it may be in the shape of particle, scale, or lump.

When it is assumed that the whole copper alloy extruded material containing the above machinability improvement element particle is 100% by weight, the content of the machinability improvement element is preferably 0.1 to 3% by weight. When the content is more than 0.1% by weight, there can be provided the effect that the above cutting resistance is lowered and the tool life is elongated and the cutting time is shortened, and at the same time, since the cut debris become smaller, they can be easily discharged at the time of processing. However, even when the content exceeds 3% by weight, the effect reflecting that value is not provided. To the contrary, the strength and toughness of the copper alloy extruded material are lowered. Especially, when the content of the machinability improvement element particle is set to 0.3% to 1% by weight, the machinability can be improved while the strength and toughness are kept high.

When the particle diameter of the machinability improvement element particle is set to be not less than 5 µm but not more than 300 µm, both mechanical characteristics and free-machining properties can be excellent in the copper alloy extruded material. When it is less than 5 µm, the fine particles aggregate due to static attracting force and a secondary particle is formed, and when this secondary particle exists in the copper alloy, the strength and toughness are lowered. Meanwhile, when the diameter is more than 300 µm, the strength and toughness are also lowered. As a result, in view of the mixability with the copper alloy powder and compacting moldability, it is preferable that the particle diameter of the machinability improvement element particle is 20 µm to 150 µm.

The copper alloy component constituting the base of the copper alloy extruded material according to the present invention will be described.

A copper alloy extruded material according to a first embodiment has an alloy composition containing 77 to 88% by weight of copper, 8.5 to 12% by weight of aluminum, 0.5 to 5.5% by weight of nickel, 2 to 5% by weight of iron, 0.5 to 2% by weight of manganese and the balance of zinc when it is assumed that the whole copper alloy constituting the matrix is 100% by weight.

When aluminum is added, the strength, hardness and resistance to oxidation at high temperatures can be improved in the copper alloy. According to the copper content range in the alloy, when aluminum is less than 8.5% by weight, the above effects cannot be sufficiently provided. Meanwhile, even when the content exceeds 12%, while the effect cannot be further improved, the toughness of the copper alloy is lowered. In addition, in a case where the billet manufactured by melting and casting is used, when more than 4% by weight of aluminum is added, a Cu-Al intermetallic compound becomes large, which lowers the toughness of the copper alloy extruded material. However, in the case where the copper alloy extruded material manufactured by atomizing is used, since aluminum is forced solid solution in the base, even when more than 4% by weight of aluminum is added, the Cu-Al intermetallic compound shows a fine particle state and it is uniformly dispersed in the base. As a result, the strength is improved without causing the toughness to be lowered. In addition, when the copper alloy powder is manufactured from a cast ingot by cutting, α -phase crystal grain forming the base is recrystallized by a work strain accumulated in the powder base, and the Cu-Al intermetallic compound becomes a fine granular compound through the above process, so that the strength is improved without causing the toughness to be lowered.

When nickel is added, the strength and hardness of the copper alloy are improved. When both nickel and aluminum exist together, an Ni-Al intermetallic compound is formed to improve the above characteristics. However, when nickel content is less than 0.5% by weight, a sufficient improvement effect cannot be provided and when its content is more than 5.5% by weight, the toughness of the copper alloy extruded material is lowered.

Similar to nickel, when iron exists with aluminum, an Fe-Al intermetallic compound is formed to improve the strength, hardness, and heat resistance of the copper alloy. According to the alloy content range, when the content is less than 2% by weight, a sufficient improvement effect cannot be provided but when it exceeds 5% by weight, the toughness of the copper alloy extruded material is lowered and the surface of the extruded material is cracked or damaged.

Manganese can stabilize and enhances the alloy composition against a heating history when it is a solid solution. When the content of manganese is less than 0.5% by weight, the above effect cannot be provided but when it exceeds 2% by weight, an improvement effect reflecting it cannot be provided, so that the preferable content of manganese is 0.5 to 2%.

A copper alloy extruded material according to a second embodiment has an alloy composition containing 69 to 80% by weight of copper, and 1.8 to 3.5% by weight of silicon, and further containing at least one kind of component selected from a group consisting of 0.3 to 3.5% by weight of tin, 1 to 3.5% by weight of aluminum, and 0.02 to 0.25% by weight of phosphorus, and the balance of zinc when it is assumed that the whole copper alloy constituting the matrix is 100% by weight.

Silicon forms a γ phase to improve the toughness and the machinability of the copper alloy extruded material. When its content is less than 1.8% by weight, the above improvement effect is not sufficient and on the other hand, when it exceeds 3.5% by weight, the toughness of the copper alloy extruded material is lowered. In addition, although the improvement effect of the machinability due to the addition of silicon is small as compared with the effect of forming the old grain boundaries to be described below and the effect of the adding the machinability improvement element such as graphite, silicon improves the strength, abrasion resistance, stress corrosion cracking resistance, and resistance to oxidation at high temperatures.

Similar to silicon, tin forms the γ phase to improve the cutting performance of the copper alloy extruded material. When its content is less than 0.3% by weight, the above improvement effect is not sufficient and on the other hand, when it exceeds 3.5% by weight in the alloy content range, the toughness of the copper alloy extruded material is lowered. In addition, since the improvement effect of the machinability due to the addition of tin is small as compared with the effect of forming the old grain boundaries to be describe below and the effect of adding the machinability improvement element such as graphite, tin is not an essential element in any copper alloy extruded material defined by the present invention.

Similar to tin, aluminum can form the γ phase and it needs to be contained at least 1% by weight in order to improve the machinability. However, even when the content exceeds 3.5% by weight, the improvement effect is not enhanced but the elongation is lowered.

Phosphorous has an effect of miniaturizing the crystal grain of the α phase, whereby the strength of the copper alloy extruded material is improved and hot processability of casting is improved, so that a cast part is prevented from being damaged and cracked. When its content is less than 0.02% by weight, the above effect is not sufficient but when it exceeds 0.25% by weight, the effect does not reflect it and on the other hand, the extrusion properties are lowered and the toughness of the extruded material is lowered.

A copper alloy extruded material according to a third embodiment has an alloy composition containing 26 to 32% by weight of zinc, 0.5 to 1.5% by weight of silicon, 3 to 4.5% by weight of aluminum, 0.5 to 1.5% by weight of iron, 2 to 4.5% by weight of nickel and the balance of copper when it is assumed that the whole copper alloy constituting the matrix is 100% by weight.

This alloy is improved in abrasion resistance and aluminum and silicon form a γ phase to increase the hardness and at the same time, form a intermetallic compound with nickel and iron to increase the rigidity. According to this alloy content range, when the added elements are below their lower limit values, the improvement effect is not sufficient, but when the added elements exceed their upper limit value, the elongation is lowered. Therefore, the appropriate range of the added amount of each element is as described above.

A copper alloy extruded material according to a fourth embodiment has an alloy composition containing 55 to 65% by weight of copper, 0.2 to 7.5% by weight of aluminum, 0.1 to 4% by weight of iron, 0.5 to 5% by weight of manganese and the balance of zinc when it is assumed that the whole copper alloy constituting the matrix is 100% by weight.

Aluminum contributes to improvement in abrasion resistance and when it is contained more than 0.2% by weight, it strengthens the matrix. However, when the content exceeds 7.5% by weight in the alloy content range, the elongation is lowered.

In addition, when iron exists with aluminum, a Fe-Al intermetallic compound is formed to improve the strength, hardness and heat resistance of the copper alloy. In this alloy content range, when the content of iron is less than 0.1% by weight, the above improvement effect is not sufficient. Meanwhile, when the content exceeds 4% by weight, the toughness of the copper alloy extruded material is lowered.

Furthermore, manganese is uniformly crystallized in the matrix to improve the abrasion resistance of the alloy. When its content is less than 0.5% by weight, the above effect is not sufficient and even when it exceeds 5% by weight, the improvement effect is not enhanced.

A copper alloy extruded material according to a fifth embodiment has an alloy composition containing 55 to 64% by weight of copper, 0.1 to 0.7% by weight of iron, 0.2 to 2.5% by weight of tin and the balance of zinc when it is assumed that the whole copper alloy constituting the matrix is 100% by weight.

This copper alloy extruded material is improved in plastic workability of casting and drawing. The copper alloy extruded material in the fifth embodiment may contain 0.02 to 0.5% by weight of phosphorous according to need. This has the effect of improving dezincing resistance. When its content is below the lower limit value, the improvement effect is not sufficient and when it exceeds the upper limit value, phosphorous is segregated to the boundaries and the elongation is lowered.

According to the copper alloy extruded materials in the above first to fifth embodiments, the copper alloy constituting the matrix may contain one or more elements selected from a group consisting of 0.1 to 1.5% by weight of titanium, 0.1 to 1.5% by weight of chrome, and 0.1 to 1.5% by weight of cobalt according to need. Any of these elements has an effect of improving the strength and hardness of the copper alloy. When each content is below the lower limit value, the improvement effect is not sufficient and on the other hand, when it exceeds the upper limit value, the extrusion properties are lowered and the toughness of the copper alloy is lowered.

Furthermore, according to the copper alloy extruded materials in the above first to fifth embodiments, the copper alloy constituting the matrix may contain one or more elements selected from a group consisting of 0.02 to 4% by weight of bismuth, 0.02 to 0.4% by weight of tellurium, 0.02 to 0.4% by weight of selenium, and 0.02 to 0.15% by weight of antimony according to need. Any of these elements has an effect of improving the machinability of the copper alloy. When each content is below the lower limit value, the improvement effect is not sufficient and on the other hand, when it exceeds the upper limit value, the hot workability is lowered.

Next, a manufacturing method of the copper alloy extruded material according to the present invention will be described.

The copper alloy powder having the above-described alloy content is prepared and poured into a die or mold and then pressurized and molded, whereby a copper alloy powder solidified billet is manufactured. Here, according to need, at least one kind of machinability improvement element selected from a group comprising the above-described graphite, boron nitride, molybdenum disulfide, copper sulfide, and calcium fluoride may be added and mixed previously to the copper alloy powder. In this case, dry mixing is performed with a ball mill or V-type mixing equipment. The atmosphere is not necessarily managed or controlled and it may be performed in the air. In addition, according to the relative density of the billet, a binding force between copper alloy powder is needed to keep the billet from being damaged during transportation, and it is desirable to pressurize the powder until its relative density becomes 80% or more (vacancy rate is 20% or less).

The billet manufactured as described above is heated and immediately extruded, whereby a dense copper alloy extruded material is provided. At this time, the extrusion ratio should be within a range of 20 to 500 in order to form the above-described old grain boundaries with the strength and toughness of the extruded material maintained. When the extrusion ratio is less than 20, since the diffusion and binding of the copper alloy powder forming the base are not enough, the strength and the toughness are lowered. Meanwhile, when the extrusion rate is more than 500, the old grain boundaries are reduced. In this case, although the strength and the toughness are further improved, the cut powder (cut debris) discharged at the time of cutting has the continuous curled shape as shown in Fig. 1(d) and Fig. 2(d), so that the machinability is lowered.

In addition, it is desirable that the heating temperature of the billet is controlled within a range of 400°C to 800°C. When it is less than 400 °C, since the diffusion and bonding of the copper alloy powder are not enough, the strength and the toughness are lowered. Meanwhile, the temperature exceeds 800°C, the crystal grain constituting the base of the copper alloy becomes large, causing the tensile proof stress of the copper alloy extruded material to be lowered. In addition, the problem that the surface of the extruded material is cracked along the circumferential direction is caused.

In addition, one object of the present invention is to provide a copper alloy extruded material having superior machinability and its manufacturing method without using lead or cadmium that is said to adversely affect the human body and the environment. Meanwhile, since the lead content in the copper alloy can be allowed to 4% by weight according to the European RoHS, the copper alloy extruded material according to the present invention may follow this. That is, the copper alloy extruded material according to one embodiment of the present invention may contain 0.3 to 4% by weight of lead when it is assumed that the whole copper alloy extruded material is 100% by weight. As described above, when it contains lead, superior free-machining properties can be implemented. In order to obtain its excellent effect, it is preferable that the content of lead is more than 0.3% by weight. Meanwhile, the content exceeding 4% by weight is not preferable in view of the above RoHS and because the strength of the extruded material is lowered. In addition, lead is not indispensable in the copper alloy extruded material according to the embodiments of the present invention in many cases.

### Example 1

This example 1 corresponds to the copper alloy extruded material according to the above first embodiment.

A cast copper alloy ingot having the composition shown in Table 1 was prepared and powder (having a length of 0.5 to 4mm) manufactured from the ingot by cutting, as a starting material was poured into a die mounted on a press machine and pressurized and solidified, whereby a cylindrical powder solidified billet having a diameter of 59.8mm φ and a length of 98mm was manufactured. This billet was heated and kept at 650 to 720°C for 30 minutes in a nitrogen gas atmosphere and immediately poured into an extruding container having an inner diameter of 60mm φ and extruded at an extrusion ratio of 37.5, whereby an extruded material having a diameter of 9.8mm φ was manufactured.

**Table 1**

| SAMPLE NO. | Cu | Si | Sn | Al | P | Mn | Ni | Bi | Te | Se | Sb | Cr | Ti | Fe | Co | Zn | CUT POWDER SHAPE | STRENGTH | ELONGATION |
|---|---|---|---|---|---|---|---|---|---|---|---|---|---|---|---|---|---|---|---|
| 1 | 80.4 | | | 11 | | 1.7 | 1.6 | | | | | | | 4.8 | | THE BALANCE | b | 763 | 20 |
| 2 | 84.1 | | | 10.5 | | 0.7 | 1.7 | | | | | | | 2.9 | | THE BALANCE | b | 782 | 22 |
| 3 | 78.6 | | | 11.3 | | 0.9 | 5.3 | | | | | | | 3.6 | | THE BALANCE | a | 810 | 19 |
| 4 | 86.5 | | | 8.7 | | 0.6 | 1.6 | | | | | | | 2.2 | | THE BALANCE | b | 706 | 31 |
| 5 | 83.1 | | | 10.4 | | 1.5 | 0.7 | | | | | | | 3.9 | | THE BALANCE | b | 795 | 19 |
| 6 | 82.3 | | | 11.6 | | 0.8 | 2.2 | | | | | | | 2.9 | | THE BALANCE | a | 816 | 17 |
| 7 | 84.9 | | | 9.1 | | 0.7 | 1.1 | | | | | | | 4 | | THE BALANCE | b | 735 | 28 |
| 8 | 84.8 | | | 6.5 | | 1.5 | 4 | | | | | | | 2.8 | | THE BALANCE | b | 657 | 35 |
| 9 | 82.5 | | | 12.5 | | 0.6 | 0.8 | | | | | | | 3.1 | | THE BALANCE | a | 860 | 9 |

A tensile test specimen having a diameter of 3.5mm φ and a parallel part of 20mm was taken from the extruded material manufactured as described above and a tensile test was performed at room temperature at a strain speed of 5x10⁻⁴/second. In addition, a cutting test was performed to compare the shape of generated cut debris. The signs for the shapes of cut powder in Table 1 correspond to the signs in Figs. 1 and 2. That is, "a" designates the cut powder shape shown in Fig. 1(a) and Fig. 2(a), "b" designates the cut powder shape shown in Fig. 1(b) and Fig. 2(b), "c" designates the shape shown in Fig. 1(c) and Fig. 2(c), and "d" designates the shape shown in Fig. 1(d) and Fig. 2(d). The same is true in the following Tables 2, 3, 4, 5, 6, 7, 8, 9, and 11.

In addition, the cutting condition was as follows.
Cutting speed of material : 25m/minute
Cutting amount : 1.25mm
Feeding amount : 0.05mm/revolution
Cutting tool material : Cemented carbide
Cutting oil Oil based

The copper alloy extruded material provided by extruding the billet manufactured by solidifying the copper alloy powder as described above has the shape ("a" or "b") that is superior in discharging efficiency and shows preferable cutting performance.

In addition, according to the samples No. 1 to 7, since their alloy contents are preferable, brass alloy extruded materials having high strength and high toughness (high elongation value) can be provided. However, according to the sample No. 8, since Al content is as small as 6.5% by weight, the strength is lowered as compared with the other copper alloys and according to the sample No.9, Al content is as much as 12.5% by weight, the elongation is considerably lowered although the strength is increased.

### Example 2

This example 2 corresponds to the copper alloy extruded material according to the above second embodiment.

A cast copper alloy ingot having the composition shown in Table 2 was prepared and powder (having a length of 0.8 to 4.5mm) manufactured from the ingot by cutting, as a starting material was poured into a die mounted on a press machine and pressurized and solidified, whereby a cylindrical powder solidified billet having a diameter of 59.8mm φ and a length of 98mm was manufactured. This billet was heated and kept at 660 to 725°C for 30 minutes in a nitrogen gas atmosphere and immediately poured into an extruding container having an inner diameter of 60mm φ and extruded at an extrusion ratio of 37.5, whereby an extruded material having a diameter of 9.8mm φ was manufactured.

**Table 2**

| SAMPLE NO. | Cu | Si | Sn | Al | P | Mn | Ni | Bi | Te | Se | Sb | Cr | Ti | Fe | Co | Zn | CUT POWDER SHAPE | STRENGTH | ELONGATION |
|---|---|---|---|---|---|---|---|---|---|---|---|---|---|---|---|---|---|---|---|
| 10 (EXAMPLE) | 75 | 3.2 | | | 0.08 | | | | 0.03 | 0.12 | | | | | | THE BALANCE | b | 515 | 36 |
| 11 (EXAMPLE) | 71.6 | 2.4 | 2.3 | | 0.03 | | | | | | 0.03 | | | | | THE BALANCE | b | 525 | 28 |
| 12 (EXAMPLE) | 76.5 | 3.1 | 0.8 | 1.1 | 0.05 | | | | | | | | | | | THE BALANCE | b | 552 | 34 |
| 13 (EXAMPLE) | 77.5 | 3.5 | 0.6 | | | | | | | | | | | | | THE BALANCE | b | 570 | 36 |
| 14 (EXAMPLE) | 75.4 | 3.2 | 1.7 | | | | | | | | | | | | | THE BALANCE | b | 541 | 29 |
| 15 (EXAMPLE) | 76.5 | 3.3 | | | 0.22 | | | | | | | | | | | THE BALANCE | b | 560 | 35 |
| 16 (EXAMPLE) | 73.8 | 2.7 | | | 0.04 | | | 0.03 | 0.06 | 0.03 | | | | | | THE BALANCE | b | 519 | 37 |
| 17 (EXAMPLE) | 75 | 2.9 | 1.5 | | 0.11 | | | | | | | | | | | THE BALANCE | b | 534 | 31 |
| 18 (EXAMPLE) | 74.9 | 1.8 | 1.4 | 1.5 | | | | | | | | | 0.05 | | | THE BALANCE | b | 526 | 28 |
| 19 (EXAMPLE) | 76.5 | 2.8 | | 2.2 | 0.21 | | | | | | | | | | | THE BALANCE | b | 546 | 38 |
| 20 (EXAMPLE) | 71.7 | 2.3 | 3.2 | | | | | | | | | | | | | THE BALANCE | b | 553 | 26 |
| 21 (EXAMPLE) | 78.2 | 2.3 | | 3.3 | 0.03 | | | | | | | | | | | THE BALANCE | b | 538 | 32 |
| 22 (EXAMPLE) | 73.2 | 0.8 | | 2.2 | 0.05 | | | | | | | | | | | THE BALANCE | b | 440 | 45 |
| 23 (EXAMPLE) | 76.5 | 2 | 1.2 | 0.5 | | | | | | | | | | | | THE BALANCE | b | 432 | 48 |
| 24 (COMPARISON EXAMPLE) CAST BILLET | 71.6 | 2.4 | 2.3 | | 0.03 | | | | | | 0.03 | | | | | THE BALANCE | d | 530 | 29 |

A tensile test specimen having a diameter of 3.5mm φ and a parallel part of 20mm was taken from the extruded material manufactured as described above and a tensile test was performed at room temperature at a strain speed of 5x10⁻⁴/second. In addition, a cutting test was performed to compare the shape of generated cut debris.

In addition, the cutting condition was as follows.
Cutting speed of material : 25m/minute
Cutting amount : 1.25mm
Feeding amount : 0.05mm/revolution
Cutting tool material : Cemented carbide
Cutting oil : Oil based

The copper alloy extruded materials (samples No. 10 to 23) provided by extruding the billet manufactured by solidifying the copper alloy powder as described above have the shape "b" that is superior in discharging efficiency and show preferable cutting performance.

Meanwhile, according to a copper alloy extruded material (sample No. 24) manufactured by extruding a cast copper alloy ingot under the same condition, although the mechanical characteristics are excellent, continuous curled cut powder (shape "d") is generated in the cutting test and its machinability has a problem.

In addition, according to the samples No. 10 to 21, since their alloy contents are preferable, brass alloy extruded materials having high strength and high toughness (high elongation value) can be provided. However, according to the sample No. 22, since Si content is as small as 0.8% by weight, the strength is lowered as compared with the other copper alloys and according to the sample No.23, Al content is as small as 0.5% by weight, the strength is lowered as compared with the other copper alloys.

### Example 3

This example 3 corresponds to the copper alloy extruded material according to the above third embodiment.

A cast copper alloy ingot having the composition shown in Table 3 was prepared and powder (having a length of 1.1 to 4.8mm) manufactured from the ingot by cutting, as a starting material was poured into a die mounted on a press machine and pressurized and solidified, whereby a cylindrical powder solidified billet having a diameter of 59.8mm φ and a length of 98mm was manufactured. This billet was heated and kept at 640 to 705°C for 30 minutes in a nitrogen gas atmosphere and immediately poured into an extruding container having an inner diameter of 60mm φ and extruded at an extrusion ratio of 37.5, whereby an extruded material having a diameter of 9.8mm φ was manufactured.

**Table 3**

| SAMPLE NO. | Cu | Si | Sn | Al | P | Mn | Ni | Bi | Te | Se | Sb | Cr | Ti | Fe | Co | Zn | CUT POWDER SHAPE | STRENGTH | ELONGATION |
|---|---|---|---|---|---|---|---|---|---|---|---|---|---|---|---|---|---|---|---|
| 25 | THE BALANCE | 0.8 | | 3.6 | | | 2.5 | | | | | | | 0.7 | 0.8 | 29.1 | b | 668 | 10 |
| 26 | THE BALANCE | 1.1 | | 4.1 | | | 3.3 | | | | | | | 1.1 | | 26.2 | b | 681 | 11 |
| 27 | THE BALANCE | 0.8 | | 3.9 | | | 2.2 | | | | | | | 1.2 | | 30.4 | b | 695 | 9 |
| 28 | THE BALANCE | 0.6 | | 3.2 | | | 2.9 | | | | | | | 1.1 | | 31.8 | b | 625 | 15 |
| 29 | THE BALANCE | 1 | | 4.3 | | | 3.8 | | | | | | | 1.4 | | 27.8 | b | 629 | 13 |
| 30 | THE BALANCE | 1.6 | | 3.3 | | | 3 | | | | | | | 1.2 | | 27.8 | b | 734 | 5 |
| 31 | THE BALANCE | 0.3 | | 3.5 | | | 2.5 | | | | | | | 0.8 | | 28.8 | b | 515 | 20 |

A tensile test specimen having a diameter of 3.5mm φ and a parallel part of 20mm was taken from the extruded material manufactured as described above and a tensile test was performed at room temperature at a strain speed of 5x10⁻⁴/second. In addition, a cutting test was performed to compare the shape of generated cut debris.

In addition, the cutting condition was as follows.
Cutting speed of material : 25m/minute
Cutting amount : 1.25mm
Feeding amount : 0.05mm/revolution
Cutting tool material : Cemented carbide
Cutting oil : Oil based

The copper alloy extruded materials provided by extruding the billet manufactured by solidifying the copper alloy powder as described above have the shape "b" that is superior in discharging efficiency and show preferable cutting performance.

According to samples No. 25 to 29, since their alloy contents are preferable, brass alloy extruded materials having high strength and high toughness (high elongation value) can be provided. Especially, according to the sample No. 25, since Co contents is 0.8% by weight, the strength is increased. However, according to a sample No. 30, since A1 content is 3.3% by weight and Si content is as much as 1.6% by weight, the elongation is considerably lowered although the strength is increased, and according to a sample No.31, Si content is as small as 0.3% by weight, the strength is lowered as compared with the other copper alloys.

### Example 4

This example 4 corresponds to the copper alloy extruded material according to the above fourth embodiment.

A cast copper alloy ingot having the composition shown in Table 4 was prepared and powder (having a length of 0.5 to 4.2mm) manufactured from the ingot by cutting, as a starting material was poured into a die mounted on a press machine and pressurized and solidified, whereby a cylindrical powder solidified billet having a diameter of 59.8mm φ and a length of 98mm was manufactured. This billet was heated and kept at 660 to 725°C for 30 minutes in a nitrogen gas atmosphere and immediately poured into an extruding container having an inner diameter of 60mm φ and extruded at an extrusion ratio of 37.5, whereby an extruded material having a diameter of 9.8mm φ was manufactured.

**Table 4**

| SAMPLE NO. | Cu | Si | Sn | Al | P | Mn | Ni | Bi | Te | Se | Sb | Cr | Ti | Fe | Co | Zn | CUT POWDER SHAPE | STRENGTH | ELONGATION |
|---|---|---|---|---|---|---|---|---|---|---|---|---|---|---|---|---|---|---|---|
| 32 (EXAMPLE) | 55.2 | | | 0.7 | | 0.8 | | | | | | | | 0.3 | | THE BALANCE | b | 576 | 34 |
| 33 (EXAMPLE) | 60.8 | | | 2.2 | | 2.9 | | | | | | | | 1.5 | | THE BALANCE | b | 520 | 39 |
| 34 (EXAMPLE) | 59.1 | | | 1.6 | | 2.2 | | | | | | | | 1.1 | | THE BALANCE | b | 527 | 41 |
| 35 (EXAMPLE) | 63.4 | | | 6.7 | | 4.3 | | | | | | | 0.1 | 3.4 | | THE BALANCE | b | 712 | 16 |
| 36 (EXAMPLE) | 64.7 | | | 7.3 | | 4.7 | | | | | | | | 3.7 | | THE BALANCE | b | 717 | 18 |
| 37 (EXAMPLE) | 62.8 | | | 5.5 | | 3.7 | | | | | | | 0.3 | 3.1 | | THE BALANCE | b | 675 | 15 |
| 38 (EXAMPLE) | 57.1 | | | 1.1 | | 1.8 | | | | | | | | 0.9 | | THE BALANCE | b | 547 | 33 |
| 39 (EXAMPLE) | 61.5 | | | 3.6 | | 3.6 | | | | | | | | 2.8 | | THE BALANCE | b | 589 | 27 |
| 40 (EXAMPLE) | 58.5 | | | 0.3 | | 1 | | | | | | | | 0.4 | | THE BALANCE | b | 455 | 43 |
| 41 (COMPARISON EXAMPLE) CAST BILLET | 61.8 | | | 2.2 | | 2 | | | | | | | | 1.8 | | THE BALANCE | d | 513 | 38 |

A tensile test specimen having a diameter of 3.5mm φ and a parallel part of 20mm was taken from the extruded material manufactured as described above and a tensile test was performed at room temperature at a strain speed of 5x10⁻⁴/second. In addition, a cutting test was performed to compare the shape of generated cut debris.

In addition, the cutting condition was as follows.
Cutting speed of material : 25m/minute
Cutting amount : 1.25mm
Feeding amount : 0.05mm/revolution
Cutting tool material: Cemented carbide
Cutting oil : Oil based

The copper alloy extruded materials (samples No. 23 to 40) provided by extruding the billet manufactured by solidifying the copper alloy powder as described above have the shape "b" that is superior in discharging efficiency and show preferable cutting performance.

Meanwhile, according to a copper alloy extruded material (sample No. 41) manufactured by extruding a cast copper alloy ingot under the same condition, although the mechanical characteristics are excellent, the continuous curled powder (shape "d") is generated in the cutting test and its machinability has a problem.

In addition, according to the samples No. 32 to 39, since their alloy contents are preferable, brass alloy extruded materials having high strength and high toughness (high elongation value) are provided. Especially, according to the samples No. 35 and 37, since Ti content is 0.1 to 0.3% by weight, the strength of the extruded material is increased. However, according to the sample No. 40, since Al content is as small as 0.3% by weight, Mn content is as small as 1% by weight and Fe content is as small as 0.4% by weight, the strength is lowered as compared with the other copper alloys.

### Example 5

This example 5 corresponds to the copper alloy extruded material according to the above fifth embodiment.

A cast copper alloy ingot having the composition shown in Table 5 was prepared and powder (having a length of 0.7 to 3.9mm) manufactured from the ingot by cutting, as a starting material was poured into a die mounted on a press machine and pressurized and solidified, whereby a cylindrical powder solidified billet having a diameter of 59.8mm φ and a length of 98mm was manufactured. This billet was heated and kept at 640 to 700°C for 30 minutes in a nitrogen gas atmosphere and immediately poured into an extruding container having an inner diameter of 60mm φ and extruded at an extrusion ratio of 37.5, whereby an extruded material having a diameter of 9.8mm φ was manufactured.

**Table 5**

| SAMPLE NO. | Cu | Si | Sn | Al | P | Mn | Ni | Bi | Te | Se | Sb | Cr | Ti | Fe | Co | Zn | CUT POWDER SHAPE | STRENGTH | ELONGATION |
|---|---|---|---|---|---|---|---|---|---|---|---|---|---|---|---|---|---|---|---|
| 42 | 59.3 | | 0.3 | | | | | | | | | | | 0.2 | | THE BALANCE | b | 448 | 33 |
| 43 | 60.8 | | 0.8 | | 0.08 | | | | | | | | | 0.1 | | THE BALANCE | b | 421 | 35.5 |
| 44 | 57.6 | | 0.2 | | | | | | | | | | | 0.2 | | THE BALANCE | b | 483 | 31.5 |
| 45 | 62.5 | | 0.3 | | | | | | | | | | | 0.3 | | THE BALANCE | b | 424 | 36.4 |
| 46 | 58.5 | | 0.2 | | | | | | | | | | | 0.2 | | THE BALANCE | b | 463 | 34.3 |
| 47 | 56.4 | | 0.3 | | | | | | | | | | | 0.3 | | THE BALANCE | b | 512 | 27.3 |
| 48 | 63.3 | | 0.3 | | | | | | | | | | | 0.3 | | THE BALANCE | b | 417 | 36.3 |
| 49 | 61.6 | | 2.2 | | 0.1 | | | 1.4 | | | 0.05 | | | 0.1 | | THE BALANCE | b | 484 | 30.5 |
| 50 | 55.2 | | 0.3 | | | | | | | | | | | 0.3 | | THE BALANCE | b | 540 | 16.5 |
| 51 | 64.8 | | 0.2 | | | | | | | | | | | 0.1 | | THE BALANCE | b | 315 | 44.5 |
| 52 | 59.6 | | 0.2 | | | | | | | | | | | 0.2 | | THE BALANCE | d | 433 | 32.5 |

A tensile test specimen having a diameter of 3.5mm φ and a parallel part of 20mm was taken from the extruded material manufactured as described above and a tensile test was performed at room temperature at a strain speed of 5x10⁻⁴/second. In addition, a cutting test was performed to compare the shape of generated cut debris.

In addition, the cutting condition was as follows.
Cutting speed of material : 25m/minute
Cutting amount : 1.25mm
Feeding amount : 0.05mm/revolution
Cutting tool material : Cemented carbide
Cutting oil : Oil based

The copper alloy extruded materials provided by extruding the billet manufactured by solidifying the copper alloy powder as described above have the shape "b" that is superior in discharging efficiency and show preferable cutting performance.

According to samples No. 42 to 50, since their alloy contents are preferable, brass alloy extruded materials having high strength and high toughness (high elongation value) are provided. However, according to a sample No. 51, since only 0.2% by weight of Sn is only contained as an element other than Cu and Zn, the strength is lowered as compared with the other copper alloys.

Meanwhile, according to a copper alloy extruded material (sample No. 52) manufactured by extruding a cast copper alloy ingot under the same condition, although the mechanical characteristics are excellent, the continuous curled powder (shape "d") is generated in the cutting test and its machinability has a problem.

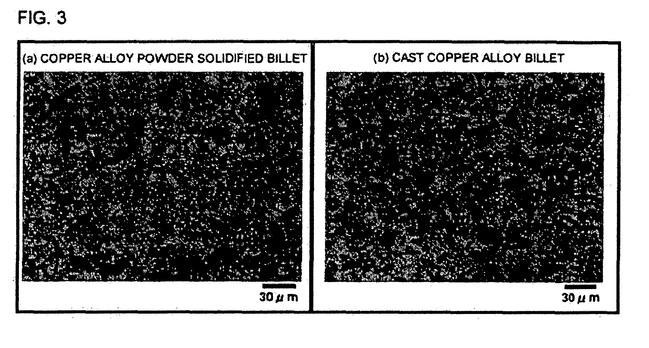

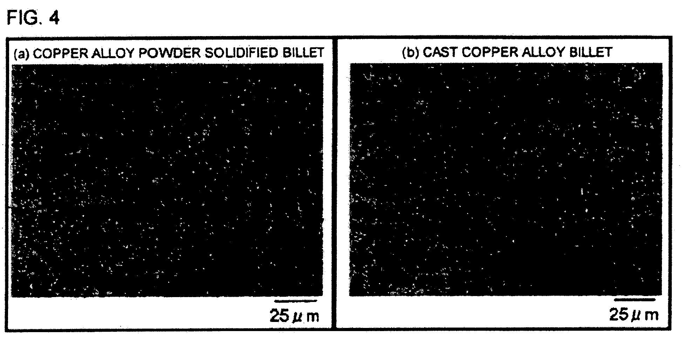

Fig. 3 shows metal photographs of the samples No. 42 and No.52. As shown in Fig. 3(a), in the case where the copper alloy powder solidified billet according to the present invention is used (sample No. 42), old grain boundaries are observed in the base of the extruded material as shown by arrows. Meanwhile, as shown in Fig. 3(b), in the case where the billet manufactured by casting is used (sample No. 52), old grain boundaries shown in Fig. 3(a) are not observed. Fig. 4 is texture photographs to which lines showing the old grain boundaries are added to the texture photograph shown in Fig. 3.

### Example 6

A cast copper alloy ingot having the composition containing 82.5% Cu, 9.3% Al, 0.9% Mn, 1.7% Ni, 3.2% Fe by weight, and the balance of Zn as the elements belonging to the copper alloy extruded material according to the above first embodiment was prepared and powder (having a length of 0.5 to 4mm) manufactured from the ingot by cutting, as a starting material was poured into a die mounted on a press machine and pressurized and solidified, whereby a cylindrical powder solidified billet having a diameter of 59.8mm φ and a length of 98mm was manufactured. This billet was heated and kept at 680°C for 30 minutes in a nitrogen gas atmosphere and immediately poured into an extruding container having an inner diameter of 60mm φ and extruded at an extrusion ratio of 37.5, whereby an extruded material having a diameter of 9.8mm φ was manufactured.

In addition, for comparison, a cast billet having the same dimension was manufactured from a cast copper alloy ingot having the same composition as in the above and this billet was extruded under the same condition and an extruded material having a diameter of 9.8mm φ was manufactured.

The extruded material manufactured as described above was pickled and processed by drawing at room temperature at a reduction rate of 4.5%. Then, a tensile test specimen having a diameter of 3.5mm φ and a parallel part of 20mm was taken from the above material and a tensile test was performed at room temperature at a strain speed of 5x10⁻⁴/second. In addition, the texture of each material was observed by an optical microscope.

A cutting test was performed for the material processed by drawing to compare the shape of generated cut debris.

In addition, the cutting condition was as follows.
Cutting speed of material : 25m/minute
Cutting amount : 1.25mm
Feeding amount : 0.05mm/revolution
Cutting tool material : Cemented carbide
Cutting oil : Oil based

Table 6 shows the results of the measurement of the tensile test and Vickers hardness and the state of the surface of the material processed by drawing. It has been confirmed that there is not much difference in mechanical characteristics between the materials processed by extruding and drawing from the copper alloy powder solidified billet and the cast copper alloy billet, and thus, it has been confirmed that the copper alloy extruded material using the copper alloy powder obtained through the manufacturing process proposed by the present invention has preferable mechanical characteristics.

**Table 6**

| | TENSILE STRENGTH (MPa) | 0.2% PROOF STRESS (MPa) | ELONGATION (%) | VICKERS HARDNESS | SURFACE STATE | CUT DEBRIS SHAPE | REFERENCE |
|---|---|---|---|---|---|---|---|
| COPPER ALLOY POWDER SOLIDIFIED BILLET | 762 | 611 | 22 | 162 | GOOD | b | PRESENT INVENTION EXAMPLE |
| CAST COPPER ALLOY BILLET | 767 | 597 | 21 | 162 | GOOD | d | COMPARISON EXAMPLE |

The following results are provided after observing the cut debris discharged in the cut test from the materials manufactured from the extruded and drawn copper alloy powder solidified billet and cast copper alloy billet. That is, according to the copper alloy extruded material manufactured from the copper alloy powder solidified billet according to the present invention, the cut debris has a separated discontinuous and relatively small shape (corresponding to the shapes "a" and "b") that is superior in discharging efficiency and handleability. Meanwhile, according to the extruded material manufactured from the conventional cast copper alloy billet, the cut powder has a continuous curled shape and it is cut debris having a shape that is difficult to discharge (corresponding to the shape "d").

From the above result, it has confirmed that according to the copper alloy extruded material manufactured from the copper alloy powder solidified billet proposed by the present invention, preferable cutting performance is provided while the mechanical characteristics are not lowered.

### Example 7

The copper alloy powder (having a length of 0.5 to 4mm) used in the example 6 was prepared as a starting material and natural graphite particle having an average grain diameter of 65 µm was added and mixed in it and the mixture was poured in a die similarly, whereby a cylindrical powder solidified billet having a diameter of 59.8mm φ and a length of 98mm was manufactured. This billet was heated and kept at 680 °C for 30 minutes in a nitrogen gas atmosphere and immediately poured into an extruding container having an inner diameter of 60mm φ and extruded at an extrusion ratio of 37.5, whereby an extruded material having a diameter of 9.8mm φ was manufactured.

In addition, for comparison, a cast billet having the same dimension was manufactured from the cast copper alloy ingot having the same composition as in the above by machining and this billet was extruded in the same condition and an extruded material having a diameter of 9.8mm φ was manufactured.

Table 7 shows the additive amount of graphite.

**Table 7**

| GRAPHITE ADDITIVE AMOUNT (WT.%) | TENSILE STRENGTH (MPa) | ELONGATION (%) | APPEARANCE OF MATERIAL | CUT DEBRIS SHAPE | REFERENCE |
|---|---|---|---|---|---|
| 0 | 762 | 22 | GOOD | b | PRESENT INVENTION EXAMPLE |
| 0.1 | 753 | 23 | SAME AS ABOVE | a | PRESENT INVENTION EXAMPLE |
| 0.2 | 741 | 20 | SAME AS ABOVE | a | PRESENT INVENTION EXAMPLE |
| 0.4 | 724 | 19 | SAME AS ABOVE | a | PRESENT INVENTION EXAMPLE |
| 0.8 | 702 | 17 | SAME AS ABOVE | a | PRESENT INVENTION EXAMPLE |
| 1.4 | 685 | 16 | SAME AS ABOVE | a | PRESENT INVENTION EXAMPLE |
| 2.2 | 652 | 14 | SAME AS ABOVE | a | PRESENT INVENTION EXAMPLE |
| 2.8 | 631 | 12 | SAME AS ABOVE | a | PRESENT INVENTION EXAMPLE |
| 3.2 | 563 | 7 | ROUGH | a | PRESENT INVENTION EXAMPLE |
| 3.6 | 542 | 5 | ROUGH | a | PRESENT INVENTION EXAMPLE |
| CAST COPPER ALLOY BILLET | 767 | 21 | GOOD | d | COMPARISON EXAMPLE |

The tensile test and cutting test were performed under the same condition as in the example 6 for each material. Their results are also shown in Table 7.

According to the copper alloy extruded material manufactured from the billet manufactured by compacting and solidifying the copper alloy powder to which graphite particles are added and mixed, defined by the present invention, when it contains appropriate range of graphite particles, it has been confirmed that the fine cut debris superior in discharging efficiency can be provided while the mechanical characteristics are not eminently lowered.

However, in the case where more than 3% by weight of graphite is added, it has been confirmed that the surface of the extruded material is rough and cracked in the circumferential direction, and the bonding performance of the copper alloy powder is considerably lowered due to a large additive amount of graphite. As a result, the above material defect is generated and the strength is lowered.

### Example 8

The machinability was evaluated for the copper alloy extruded material manufactured in the example 7 by a cutting test with a drill. The cutting test with the drill is performed in such a manner that while a constant load is applied to the drill (a weight of 2.58kg is added here), a time taken to make a hole having a depth of 5mm in the copper alloy extruded material is compared. As the time becomes short, it means that the machinability is more preferable.

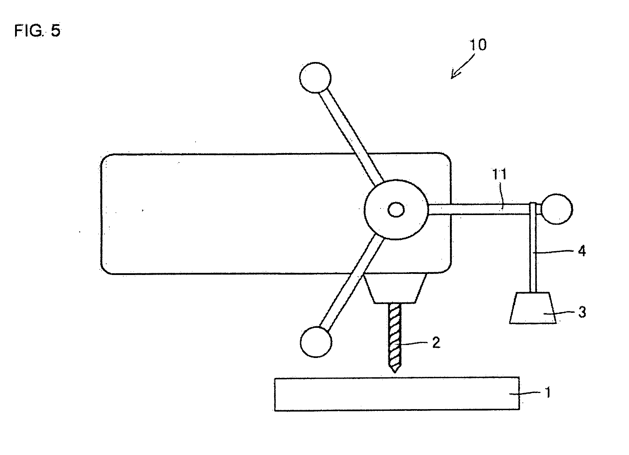

In Fig. 5, reference numeral 1 designates the sample (copper alloy extruded material), reference numeral 2 designates the drill, reference numeral 3 designates the weight, reference numeral 4 designates a string, reference numeral 10 designates a drilling machine, and reference numeral 11 designates a handle.

In addition, the cutting test was performed in such a manner that a high-speed steel drill having a diameter of 4.5mm φ was used and the rotation speed and the cutting amount of the drill were set to 400rpm and 5mm, respectively under dry condition (no cutting oil). The results are shown in Table 8

**Table 8**

| GRAPHITE ADDITIVE AMOUNT (WT.%) | CUTTING TIME (SECOND) | CUT DEBRIS SHAPE | REFERENCE |
|---|---|---|---|
| 0 | 31.7 | b | PRESENT INVENTION EXAMPLE |
| 0.1 | 29.7 | a | PRESENT INVENTION EXAMPLE |
| 0.2 | 26.4 | a | PRESENT INVENTION EXAMPLE |
| 0.4 | 24.1 | a | PRESENT INVENTION EXAMPLE |
| 0.8 | 23.1 | a | PRESENT INVENTION EXAMPLE |
| 1.4 | 20.3 | a | PRESENT INVENTION EXAMPLE |
| 2.2 | 18.6 | a | PRESENT INVENTION EXAMPLE |
| 2.8 | 15.6 | a | PRESENT INVENTION EXAMPLE |
| Pb-CONTAINING CAST COPPER ALLOY BILLET | 31.1 | d | COMPARISON EXAMPLE |

A comparison material is a copper alloy extruded material provided by extruding a lead-containing cast copper alloy billet having the composition of 82.5% Cu, 9.3% Al, 0.9% Mn, 1.7% Ni, 3.2% Fe, 1.6% Pb by weight and the balance of Zn, under the same condition.

According to the copper alloy extruded material manufactured from the billet provided by compacting and solidifying the copper alloy powder to which the graphite particles are added and mixed, defined by the present invention, when it contains the appropriate additive range of graphite particles, it has the machinability superior to the extruded material from the Pb-containing cast copper alloy ingot and in addition, the machinability is improved as the additive amount of the graphite particles is increased. Furthermore, as for the shape of the cut debris (cut powder), the continuous curled cut debris (shape "d") is provided in the one using the cast copper alloy ingot. Meanwhile, according to the extruded materials using the copper alloy powder solidified billet and the graphite-containing copper alloy powder solidified billet proposed by the present invention, a fine granular cut powder having preferable discharging efficiency (shape "a" or "b") is provided.

### Example 9

A cast copper alloy ingot having the composition containing 75.1% Cu, 2.6% Si, 1.1% Sn,1.2% Al, 0.1% P, 0.05% Te, 0.05% Ti by weight, and the balance of Zn as the elements belonging to the copper alloy extruded material according to the second embodiment was prepared and powder (having a length of 0.8 to 3mm) manufactured from the ingot by cutting, as a starting material was poured into a die mounted on a press machine and pressurized and solidified, whereby a cylindrical powder solidified billet having a diameter of 59.8mm φ and a length of 98mm was manufactured. This billet was heated and kept at 700°C for 30 minutes in a nitrogen gas atmosphere and immediately poured into an extruding container having an inner diameter of 60mm φ and manufactured using a die having a hole diameter shown in Table 9. In addition, the extrusion ratio "r" in Table 9 was calculated assuming that r = (container inner diameter/die hole diameter)².

The tensile test and the cutting test were performed for each extruded material under the same condition as in the example 6. The results are also shown in Table 9.

**Table 9**

| DIE DIAMETER (mm) | EXTRUSION RATIO | TENSILE STRENGTH (MPa) | ELONGATION (%) | APPEARANCE OF MATERIAL | CUT DEBRIS SHAPE |
|---|---|---|---|---|---|
| 20 | 9.0 | 365 | 22 | GOOD | a |
| 17 | 12.5 | 402 | 27 | GOOD | a |
| 15 | 16.0 | 441 | 29 | GOOD | b |
| 12 | 25.0 | 530 | 37 | GOOD | b |
| 8 | 56.3 | 541 | 33 | GOOD | b |
| 6.5 | 85.2 | 558 | 35 | GOOD | b |
| 5.5 | 119.0 | 564 | 33 | GOOD | b |
| 4.0 | 225.0 | 579 | 31 | GOOD | b |
| 2.5 | 576.0 | 582 | 30 | GOOD | d |

When the copper alloy powder solidified billet is extruded at an appropriate extrusion ratio defined by the present invention, the extruded material has a preferable tensile strength and machinability (shape "a" or "b"). Especially, when the extrusion ratio is more than 20, the tensile strength of the extruded material is further improved.

Meanwhile, the extrusion ratio is less than 8, since the bonding performance of the copper alloy powder constituting the base of the extruded material is not enough, the tensile strength of the extruded material is lowered. Meanwhile, when the extrusion ratio is more than 500, since the bonding of the copper alloy powder is considerably progressed by strong plastic working at the time of extrusion, the old grain boundaries that are characteristic of the present invention do not remain in the base and the cut debris (cut powder) has a continuously curled shape (shape "c" or "d"). As a result, the machinability of the extruded material is lowered. In addition, even when the extrusion ratio is more than 120, although both high mechanical characteristics and excellent machinability can be implemented, since a high load pressure is needed at the time of extrusion, a big extrusion equipment is needed and the die is abraded and damaged, which causes an economic problem in some cases.

### Example 10

The copper alloy powder (having a length of 0.8 to 3mm) used in the example 9 was prepared as a starting material, and poured in a die mounted on a press machine and pressurized and solidified, whereby a cylindrical powder solidified billet having a diameter of 59.8mm φ and a length of 98mm was manufactured. This billet was heated and kept at temperature shown in Table 10 for 30 minutes in a nitrogen gas atmosphere and immediately poured into an extruding container having an inner diameter of 60mm φ and extruded at an extrusion ratio of 37.5, whereby an extruded material having a diameter of 9.8mm φ was manufactured.

The tensile test was performed for each extruded material under the same condition as in the example 6. The results are also shown in Table 10.

**Table 10**

| BILLET HEATING TEMPERATURE (°C) | TENSILE STRENGTH (MPa) | ELONGATION (%) | APPEARANCE OF MATERIAL |
|---|---|---|---|
| 480 | 552 | 32 | GOOD |
| 600 | 545 | 33 | GOOD |
| 720 | 536 | 35 | GOOD |
| 800 | 519 | 37 | GOOD |
| 880 | 463 | 48 | GOOD |
| 380 | 324 | 11 | GOOD |

When the copper alloy powder solidified billet is heated at temperature within an appropriate range defined by the present invention and extruded, it has been confirmed that the extruded material has preferable mechanical characteristics.

Meanwhile, when the heating temperature is below 400°C, the bonding performance of the powder is not enough at the time of extrusion, so that vacancy is generated in the material, causing the mechanical characteristics to be lowered. In addition, when it exceeds 850°C, the copper crystal grain constituting the base of the copper alloy extruded material grows and becomes large, so that the strength and hardness of the extruded material are lowered.

### Example 11

A cast copper alloy ingot having the composition containing 0.8% Si, 3.1% Al, 2.8% Ni,1.1% Fe, 0.6% Co, 27.1% Zn by weight, and the balance of Cu as the elements belonging to the copper alloy extruded material according to the third embodiment was prepared and powder (having a length of 0.4 to 4.5mm) was manufactured from the ingot by cutting as a starting material and machinability improvement element particles shown in Table 11 were added and mixed in the starting material. The mixing process was performed under a dry condition with a rotation ball mill.

In addition, the average grain diameter of each added particle is as follows. That is, boron nitride is 32 µm, molybdenum disulfide is 42 µm, and calcium fluoride is 26 µm. Each mixed powder is poured into a die mounted on a press machine and pressurized and solidified, whereby a cylindrical powder solidified billet having a diameter of 59.8mm φ and a length of 98mm was manufactured. This billet was heated and kept at 650°Cfor 30 minutes in a nitrogen gas atmosphere and immediately poured into an extruding container having an inner diameter of 60mm φ and extruded at an extrusion ratio of 49.8, whereby an extruded material having a diameter of 8.5mm φ was manufactured.

**Table 11**

| MACHINABILITY IMPROVEMENT ELEMENT POWDER PARTICLE | ADDITIVE AMOUNT (WT.%) | TENSILE STRENGTH (MPa) | ELONGATION (%) | APPEARANCE OF MATERIAL | CUT DEBRIS SHAPE |
|---|---|---|---|---|---|
| BORON NITRIDE | 0 | 691 | 11 | GOOD | b |
| | 0.8 | 683 | 10 | GOOD | a |
| | 1.5 | 672 | 9 | GOOD | a |
| | 3.5 | 412 | 4 | PARTIALLY ROUGH | a |
| MOLYBDENUM DISULFIDE | 0.8 | 685 | 10 | GOOD | a |
| | 1.5 | 676 | 9 | GOOD | a |
| | 2.1 | 663 | 8 | GOOD | a |
| | 3.5 | 434 | 4 | PARTIALLY ROUGH | a |
| CALCIUM FLUORIDE | 0.8 | 680 | 10 | GOOD | a |
| | 1.5 | 668 | 9 | GOOD | a |
| | 2.1 | 661 | 8 | GOOD | a |
| | 3.5 | 401 | 4 | PARTIALLY ROUGH | a |

A tensile test specimen having a diameter of 3.5mm φ and a parallel part of 20mm was taken from the extruded material manufactured as described above and a tensile test was performed at room temperature at a strain speed of 5x10⁻⁴/second. In addition, a cutting test was performed to compare the shape of generated cut debris similar to the example 6.

In addition, the cutting condition was as follows.
Cutting speed of material : 25m/minute
Cutting amount : 1.25mm
Feeding amount : 0.05mm/revolution
Cutting tool material : Cemented carbide
Cutting oil : Oil based

Table 11 shows the results of the tensile test and the shape of the cut debris. When the appropriate amount of machinability improvement element particles defined by the present invention are dispersed in the base of the copper alloy extruded material, the cut debris can be small and the machinability can be improved while the mechanical characteristics are not lowered. However, when more than 3% by weight of the element is added, the problem is that the tensile strength and elongation of the copper alloy extruded material are lowered similar to the case of the graphite powder particle.

In addition, the inventors have confirmed that the same effect can be provided even when two or more machinability improvement elements including the graphite powder are mixed with the copper alloy powder.

### Example 12

A cast copper alloy ingot having the composition containing 61.4% Cu, 3.4% Al, 3.2% Mn, 2.1% Fe, 0.9% Pb by weight, and the balance of Zn as the elements belonging to the copper alloy extruded material according to the fourth embodiment was prepared and powder (having a length of 0.7 to 3.6mm) was manufactured from the ingot by cutting, as a starting material, and 0.2% by weight and 0.5% by weight of graphite powder (having an average particle diameter of 43 µm) was added and mixed in this starting material. Each copper alloy powder was poured into a die mounted on a press machine and pressurized and solidified, whereby a cylindrical powder solidified billet having a diameter of 59.8mm φ and a length of 100mm was manufactured. This billet was heated and kept at 660°C for 30 minutes in a nitrogen gas atmosphere and immediately poured into an extruding container having an inner diameter of 60mm φ and extruded at an extrusion ratio of 37.5, whereby an extruded material having a diameter of 9.8mm φ was manufactured. In addition, for comparison, a cast billet having the same dimension was manufactured from a cast copper alloy ingot having the same composition as in the above by machining and this was extruded under the same condition, whereby an extruded material having a diameter of 9.8mm φ was manufactured.

The same cutting test as in the example 6 and the same cutting test with the drill as in the example 8 were performed for each extruded material manufactured as described above. The shape of the generated cut debris and a time taken to form a hole having a depth of 5mm in the copper alloy extruded material were evaluated in the former test and the latter test, respectively. The results are shown in Table 12.

**Table 12**

| | CUT DEBRIS SHAPE | CUTTING TIME (SECOND) |
|---|---|---|
| GRAPHITE POWDER; ADDITION OF 0.2% BY WEIGHT | a | 26.2 |
| GRAPHITE POWDER; ADDITION OF 0.5% BY WEIGHT | a | 22.4 |
| CAST ALLOY INGOT | d | 32.3 |

As compared with the case where the conventional lead-containing cast copper alloy billet is used, the cut debris from the powder solidified billet having the same composition shows superior discharging efficiency as discontinuous and fine cut powder. In addition, when the appropriate amount of graphite powder is added to the copper alloy powder, the cut debris is discharged as finer discontinuous cut powder and in addition, the processing time in the cutting test with the drill can be shortened.

### Example 13

Powder (having an average grain diameter of 70 µm) provided by atomizing molten metal having a composition containing 75.4% Cu, 3.1% Si, 0.11% P by weight, and the balance of Zinc as the elements belonging to the copper alloy extruded material according to the second embodiment was prepared as a starting material and 0.5% by weight of natural graphite particles having an average grain diameter of 50 µm are added and mixed in the starting material and then poured into a die, whereby a cylindrical powder solidified billet having a diameter of 59.8mm φ and a length of 98mm was manufactured. This billet was heated and kept at 700°C for 30 minutes in a nitrogen gas atmosphere and immediately poured into an extruding container having an inner diameter of 60mm φ and extruded at an extrusion ratio of 37.5, whereby an extruded material having a diameter of 9.8mm φ was manufactured.

In addition, for comparison, a cast billet having the same dimension was manufactured from a continuous cast copper alloy ingot having the same composition as in the above by machining and this billet was extruded in the same condition and an extruded material having a diameter of 9.8mm φ was manufactured.

The extruded material manufactured as described above was pickled and processed by drawing at room temperature at a reduction rate of 15.3% and then annealed at 510°C for 4.5 hours and then processed by drawing at a reduction rate of 12.6% and then annealed at 510°C for 4.5 hours and finally processed by drawing at a reduction rate of 13.5%. Then, a tensile test specimen having a diameter of 3.5mm φ and a parallel part of 20mm was taken from the above material and a tensile test was performed at room temperature at a strain speed of 5x10⁻⁴/second.

Furthermore, the machinability was evaluated by the cutting test with the drill. Here, a weight of 1.5kg was used. The test results are shown in Table 13. According to the material formed by melting, the tool is abraded away while the drill test was performed 10 times and the processing time is gradually increased. Meanwhile, according to the material having the same composition containing the graphite and manufactured by the powder solidifying method, the processing time is constant and the drill is not abraded away. In addition, it has been confirmed that its mechanical characteristics are about the same as that of the material manufactured by melting.

**Table 13**

| | | SOLIDIFIED BILLET (CONTAINING 0.5% BY WEIGHT OF GRAPHITE) | CAST BILLET |
|---|---|---|---|
| MECHANICAL CHARACTERISTICS | TENSILE STRENGTH (MPa) | 656 | 672 |
| | ELONGATION (%) | 10 | 9 |
| | PROCESSING NO. 1 | 11.3 | 11.0 |
| | 2 | 14.1 | 16.0 |
| | 3 | 15.3 | 21.0 |
| | 4 | 18.1 | 25.8 |
| PROCESSING TIME [SECOND] | 5 | 17.5 | 30.2 |
| | 6 | 18.3 | 32.3 |
| | 7 | 18.3 | 46.0 |
| | 8 | 18.6 | 48.7 |
| | 9 | 17.9 | 58.8 |
| | 10 | 18.1 | 59.2 |

### Example 14

Powder (having an average grain diameter of 70 *µ* m) provided by atomizing molten metal having a composition containing 61.4% Cu, 0.1% Fe, 0.2% Sn by weight, and the balance of Zinc as the elements belonging to the copper alloy extruded material according to the fifth embodiment was prepared as a starting material and natural graphite particles having an average grain diameter of 50 µm are added and mixed in the starting material and then poured into a die similarly, whereby a cylindrical powder solidified billet having a diameter of 59.8mm φ and a length of 98mm was manufactured. This billet was heated and kept at 700°C for 30 minutes in a nitrogen gas atmosphere and immediately poured into an extruding container having an inner diameter of 60mm φ and extruded at an extrusion ratio of 37.5, whereby an extruded material having a diameter of 9.8mm φ was manufactured.

In addition, for comparison, a cast billet having the same dimension was manufactured from a continuous cast copper alloy ingot having the same composition as in the above by machining and this billet was extruded in the same condition and an extruded material having a diameter of 9.8mm φ was manufactured. Furthermore, as a comparison material, a cast billet having the same dimension was manufactured from a cast copper alloy ingot having a composition containing 61.1% Cu, 0.1% Fe, 0.2% Sn, 3.0% lead by weight, and the balance of zinc by machining, and this billet was extruded in the same condition and an extruded material having a diameter of 9.8mm φ was manufactured.

The extruded material manufactured as described above was pickled and processed by drawing at room temperature at a reduction rate of 26% and then annealed at 460°C for 4.5 hours and finally processed by drawing at a reduction rate of 13.5%. Then, a tensile test specimen having a diameter of 3.5mm φ and a parallel part of 20mm was taken from the above material and a tensile test was performed at room temperature at a strain speed of 5x10⁻⁴/second. The relation between the additive amount of graphite and the mechanical characteristics is shown in Table 14.

Furthermore, the machinability was evaluated by the cutting test with the drill. Since the base of this material is relatively soft unlike the material of the example 8, a weight of 1.0kg was used here. The test results are shown in Table 15. From the result, it has been confirmed that the extruded brass material provided from the billet manufactured by adding graphite to the brass atomized powder and solidifying it has cutting performance and mechanical characteristics that are not inferior to those of the lead-containing free-machining brass material from the billet manufactured by a melting method that is said to have the best cutting performance among metal materials.

**Table 14**

| | GRAPHITE CONTENT (WT.%) | LEAD CONTENT (WT.%) | MECHANICAL CHARACTERISTICS | |
|---|---|---|---|---|
| | | | TENSILE STRENGTH (MPa) | ELONGATION (%) |
| | - | - | 465 | 37 |
| SOLIDIFIED BILLET | 0.2 | - | 463 | 35 |
| | 0.5 | - | 458 | 32 |
| | 0.8 | - | 452 | 28 |
| | 1.2 | - | 444 | 23 |
| CAST BILLET | - | - | 475 | 36 |
| | - | 3.0 | 450 | 25 |

**Table 15**

| | GRAPHITE CONTENT (WT.%) | LEAD CONTENT (WT.%) | AVERAGE PROCESSING TIME [SECOND] |
|---|---|---|---|
| | - | - | CANNOT BE PROCESSED |
| | 0.05 | - | CANNOT BE PROCESSED |
| SOLIDIFIED BILLET | 0.5 | - | 28.0 |
| | 0.8 | - | 20.4 |
| | 1.2 | - | 14.2 |
| CAST BILLET | - | - | CANNOT BE PROCESSED |
| | - | 3.0 | 13.6 |

### Example 15

Powder (having an average grain diameter of 70 µm) provided by atomizing molten metal having a composition containing 61.4% Cu, 0.1% Fe, 0.2% Sn by weight, and the balance of Zinc as the elements belonging to the copper alloy extruded material according to the fifth embodiment was prepared as a starting material and 0.5% by weight of natural graphite particles having an average grain diameter of 50 µm and 1.25% by weight of copper sulfide having an average grain diameter 50 µm are added and mixed in the starting material and then poured into a die similarly, whereby a cylindrical powder solidified billet having a diameter of 59.8mm φ and a length of 98mm was manufactured. This billet was heated and kept at 700 °C for 30 minutes in a nitrogen gas atmosphere and immediately poured into an extruding container having an inner diameter of 60mm φ and extruded at an extrusion ratio of 37.5, whereby an extruded material having a diameter of 9.8mm φ was manufactured.

In addition, for comparison, powder (having an average grain diameter of 70 µm) provided by atomizing molten metal having a composition 61.4% Cu, 0.1% Fe, 0.2% Sn by weight, and the balance of Zinc was prepared as a starting material and 0.5% by weight of natural graphite particles having an average grain diameter of 50 µm was added and mixed in the starting material and then poured into a die, whereby a solidified billet was manufactured similarly and this billet was extruded in the same condition and an extruded material having a diameter of 9.8mm φ was manufactured.

The extruded material manufactured as described above was pickled and processed by drawing at room temperature at a reduction rate of 26% and then annealed at 460°C for 4.5 hours and finally processed by drawing at a reduction rate of 13.5%. Then, a tensile test specimen having a diameter of 3.5mm φ and a parallel part of 20mm was taken from the above material and a tensile test was performed at room temperature at a strain speed of 5x10⁻⁴/second.

Furthermore, the machinability was evaluated by the cutting test with the drill. Here, a weight of 1.0kg was used. The test results are shown in Table 16. When copper sulfide is added together with graphite, it has been confirmed that the machinability can be further improved while the mechanical characteristics are not lowered.

**Table 16**

| CONTENT (WT.%) | | MECHANICAL CHARACTERISTICS | | AVERAGE PROCESSING TIME [SECOND] |
|---|---|---|---|---|
| GRAPHITE | COPPER SULFIDE | TENSILE STRENGTH (MPa) | ELONGATION (%) | |
| 0.5 | - | - 452 | 32 | 28.4 |
| 0.5 | 0.3 | 451 | 31 | 24.3 |
| 0.5 | 0.6 | 452 | 30 | 24.0 |
| 0.5 | 0.9 | 450 | 29 | 23.7 |
| 0.5 | 1.25 | 448 | 31 | 23.3 |
| 0.5 | 1.7 | 442 | 28 | 23.2 |

### Example 16

A cast copper alloy ingot having the composition containing 61.4% Cu, 0.1% Fe, 0.2% Sn, 3.0% Pb by weight, and the balance of Zn as the elements belonging to the copper alloy extruded material according to the fifth embodiment was prepared and powder (having a length of 0.5 to 8.9mm) was manufactured from the ingot by high-speed cutting with mineral cutting oil as a starting material, and it was stirred in an alkaline degreasing agent bath for dipping that was heated at 60°C, and washed in water and dried until it was confirmed that the starting material has no oil content at all.

This starting material was crushed in a crusher to manufacture powder having an average grain diameter of 100 µm and the powder was pressurized and solidified by a hydrostatic press machine, whereby a cylindrical powder solidified billet having a diameter of 59.8mm φ and a length of 120mm was manufactured. This billet was heated and kept at 640 to 700°C for 30 minutes in a nitrogen gas atmosphere and immediately poured into an extruding container having an inner diameter of 60mm φ and extruded at an extrusion ratio of 37.5, whereby an extruded material having a diameter of 9.8mm φ was manufactured.

In addition, for comparison, a cast billet having the same dimension was manufactured from a cast copper alloy ingot having the same composition as in the above by machining and this was extruded under the same condition, whereby an extruded material having a diameter of 9.8mm φ was manufactured.

The extruded material manufactured as described above was pickled and processed by drawing at room temperature at a reduction rate of 26% and then annealed at 460°C for 4.5 hours and finally processed by drawing at a reduction rate of 13.5%. Then, a tensile test specimen having a diameter of 3.5mm φ and a parallel part of 20mm was taken from the above material and a tensile test was performed at room temperature at a strain speed of 5x10⁻⁴/second.

Furthermore, the machinability was evaluated by the cutting test with the drill. Here, a weight of 1.0kg was used. The test results are shown in Table 17. The brass alloy material manufactured in such a manner that after the cutting oil on the powder surface had been completely removed, the powder as the raw material is compacted and extruded, has excellent mechanical characteristics and free-machining properties.

**Table 17**

| | MECHANICAL CHARACTERISTICS | | AVERAGE PROCESSING TIME [SECOND] |
|---|---|---|---|
| | TENSILE STRENGTH (MPa) | ELONGATION (%) | |
| CAST BILLET | 450 | 25 | 13.6 |
| SOLIDIFIED BILLET | 446 | 24 | 12.8 |

### Example 17

A cast copper alloy ingot having the composition containing 61.4% Cu, 0.1% Fe, 0.2% Sn, 3.0% Pb by weight, and the balance of Zn as the elements belonging to the copper alloy extruded material according to the fifth embodiment was prepared and powder (having a length of 0.5 to 8.9mm) was manufactured from the ingot by high-speed cutting with mineral cutting oil as a starting material, and it was stirred in an alkaline degreasing agent bath for dipping that was heated at 60°C, and washed in water and dried until it was confirmed that the starting material has no oil content at all.

This starting material was crushed in a crusher to manufacture powder having an average grain diameter of 100 µm and 0.3% by weight of natural graphite having an average grain diameter of 50 µm is added and mixed in the powder and the mixture was pressurized and solidified by a hydrostatic press machine, whereby a cylindrical powder solidified billet having a diameter of 59.8mm φ and a length of 120mm was manufactured. This billet was heated and kept at 640 to 700°C for 30 minutes in a nitrogen gas atmosphere and immediately poured into an extruding container having an inner diameter of 60mm φ and extruded at an extrusion ratio of 37.5, whereby an extruded material having a diameter of 9.8mm φ was manufactured.

The extruded material manufactured as described above was pickled and processed by drawing at room temperature at a reduction rate of 26% and then annealed at 460°C for 4.5 hours and finally processed by drawing at a reduction rate of 13.5%. Then, a tensile test specimen having a diameter of 3.5mm φ and a parallel part of 20mm was taken from the above material and a tensile test was performed at room temperature at a strain speed of 5x10⁻⁴/second.

Furthermore, the machinability was evaluated by the cutting test with the drill. Here, a weight of 1.0kg was used. The test results are shown in Table 18. The brass alloy material manufactured in such a manner that after the cutting oil on the powder surface had been completely removed, the predetermined amount of graphite particle is added to the powder and the mixture was compacted and extruded, has excellent mechanical characteristics and free-machining properties.

**Table 18**

| | CONTENT (WT.%) | | MECHANICAL CHARACTERISTICS | | AVERAGE PROCESSING TIME [SECOND] |
|---|---|---|---|---|---|
| | LEAD | GRAPHITE | TENSILE STRENGTH (MPa) | ELONGATION (%) | |
| SOLIDIFIED BILLET | 3.0 | 0.3 | 438 | 22 | 11.2 |

Although the embodiments of the present invention have been described with reference to the drawings in the above, the present invention is not limited to the above-illustrated embodiments. Various kinds of modifications and variations may be added to the illustrated embodiments within the same or equal scope of the present invention.

The present invention can be advantageously applied to a copper alloy extruded material requiring stable high free-machining properties and superior mechanical characteristics.

## Claims

1. A copper alloy extruded material provided by extruding a copper alloy powder solidified billet, **characterized in that**
old grain boundaries remain in the inside.

2. The copper alloy extruded material according to claim 1, containing 0.1% to 3% by weight of at least one kind of powder particle selected from a group consisting of graphite, boron nitride, molybdenum disulfide, copper sulfide and calcium fluoride in a matrix when it is assumed that the whole copper alloy extruded material is 100% by weight.

3. The copper alloy extruded material according to claim 1, containing 0.3% to 1% by weight of at least one kind of powder particle selected from a group consisting of graphite, boron nitride, molybdenum disulfide, copper sulfide and calcium fluoride in a matrix when it is assumed that the whole copper alloy extruded material is 100% by weight.

4. The copper alloy extruded material according to claim 1, wherein
a copper alloy constituting a matrix contains 77 to 88% by weight of copper, 8.5 to 12% by weight of aluminum, 0.5 to 5.5% by weight of nickel, 2 to 5% by weight of iron, 0.5 to 2% by weight of manganese, and the balance of zinc when it is assumed that the whole copper alloy constituting the matrix is 100% by weight.

5. The copper alloy extruded material according to claim 1, wherein
a copper alloy constituting a matrix contains 69 to 80% by weight of copper and 1.8 to 3.5% by weight of silicon, and containing one or more kinds of elements selected from a group consisting of 0.3 to 3.5% by weight of tin, 1 to 3.5% by weight of aluminum, 0.02 to 0.25% by weight of phosphorous, and the balance of zinc when it is assumed that the whole copper alloy constituting the matrix is 100% by weight.

6. The copper alloy extruded material according to claim 1, wherein
a copper alloy constituting a matrix contains 26 to 32% by weight of zinc, 0.5 to 1.5% by weight of silicon, 3 to 4.5% by weight of aluminum, 0.5 to 1.5% by weight of iron, 2 to 4.5% by weight of nickel, and the balance of copper when it is assumed that the whole copper alloy constituting the matrix is 100% by weight.

7. The copper alloy extruded material according to claim 1, wherein
a copper alloy constituting a matrix contains 55 to 65% by weight of copper, 0.2 to 7.5% by weight of aluminum, 0.1 to 4% by weight of iron, 0.5 to 5% by weight of manganese, and the balance of zinc when it is assumed that the whole copper alloy constituting the matrix is 100% by weight.

8. The copper alloy extruded material according to claim 1, wherein
a copper alloy constituting a matrix contains 55 to 64% by weight of copper, 0.1 to 0.7% by weight of iron, 0.2 to 2.5% by weight of tin, and the balance of zinc when it is assumed that the whole copper alloy constituting the matrix is 100% by weight.

9. The copper alloy extruded material according to claim 1, wherein
a copper alloy constituting a matrix contains one or more kinds of elements selected from a group consisting of 0.1 to 1.5% by weight of titanium, 0.1 to 1.5% by weight of chrome, and 0.1 to 1.5% by weight of cobalt.

10. The copper alloy extruded material according to claim 1, wherein
a copper alloy constituting a matrix further contains one or more kinds of elements selected from a group consisting of 0.02 to 4% by weight of bismuth, 0.02 to 0.4% by weight of tellurium, 0.02 to 0.4% by weight of selenium, and 0.02 to 0.15% by weight of antimony.

11. The copper alloy extruded material according to claim 2, wherein
the grain diameter of said powder particle is 5 µm to 300µm.

12. The copper alloy extruded material according to claim 2, wherein
said powder particles are distributed along old grain boundaries.

13. The copper alloy extruded material according to claim 1, containing 0.3 to 4% by weight of lead when it is assumed that the whole copper alloy extruded material is 100% by weight.

14. A copper alloy extruding billet for obtaining the copper alloy extruded material according to claim 1, wherein
said billet is manufactured by compacting and molding copper alloy powder.

15. A copper alloy member provided by drawing or hot casting the copper alloy extruded material according to claim 1.

16. A manufacturing method of a copper alloy extruded material, comprising:
a step of compacting copper alloy powder to manufacture a copper alloy powder solidified billet; and
a step of extruding said billet to manufacture an extruded material.

17. The manufacturing method of the copper alloy extruded material according to claim 16, wherein
an extrusion ratio of said extruding step is 20 to 500.

18. The manufacturing method of the copper alloy extruded material according to claim 16, comprising
a step of adding and mixing at least one kind of powder particle selected from a group consisting of graphite, boron nitride, molybdenum disulfide, copper sulfide and calcium fluoride in the copper alloy powder prior to said compacting step.

19. The manufacturing method of the copper alloy extruded material according to claim 18, wherein
the additive amount of said powder particle is 0.1 to 3% by weight to 100% by weight of said copper alloy powder.

20. The manufacturing method of the copper alloy extruded material according to claim 18, wherein
the grain diameter of said powder particle is 5µm to 300µm.

21. The manufacturing method of the copper alloy extruded material according to claim 16, wherein
said billet is heated at temperature within a range of 4000 to 8000 to perform said extruding step.

## Amended claims

### Amended claims under Art. 19.1 PCT

**1.** (Amended) A nonleaded free-machining copper alloy extruded material provided by extruding a copper alloy powder solidified billet obtained by mixing copper alloy powder constituting a matrix and powder particles of machinability improvement element to be replaced with a lead component, wherein
old grain boundaries remain in the inside,
said machinability implement element powder particles are distributed along said old powder boundaries,
said machinability implement element powder particle is at least one powder particle selected from a group consisting of graphite, boron nitride, molybdenum disulfide, copper sulfide and calcium fluoride, and
said machinability implement element powder particle is contained 0.1% to 3% by weight in the matrix when it is assumed that the whole copper alloy extruded material is 100% by weight.

**2.** (Deleted)

**3.** (Amended) The nonleaded free-machining copper alloy extruded material according to claim 1, containing 0.3% to 1% by weight of said machinability implement element powder particle when it is assumed that the whole copper alloy extruded material is 100% by weight.

**4.** (Amended) The nonleaded free-machining copper alloy extruded material according to claim 1, wherein
a copper alloy constituting a matrix contains 77 to 88% by weight of copper, 8.5 to 12% by weight of aluminum, 0.5 to 5.5% by weight of nickel, 2 to 5% by weight of iron, 0.5 to 2% by weight of manganese, and the balance of zinc when it is assumed that the whole copper alloy constituting the matrix is 100% by weight.

**5.** (Amended) The nonleaded free-machining copper alloy extruded material according to claim 1, wherein
a copper alloy constituting a matrix contains 69 to 80% by weight of copper and 1.8 to 3.5% by weight of silicon, and contains one or more kinds of elements selected from a group consisting of 0.3 to 3.5% by weight of tin, 1 to 3.5% by weight of aluminum, and 0.02 to 0.25% by weight of phosphorous, and the balance of zinc when it is assumed that the whole copper alloy constituting the matrix is 100% by weight.

**6.** (Amended) The nonleaded free-machining copper alloy extruded material according to claim 1, wherein
a copper alloy constituting a matrix contains 26 to 32% by weight of zinc, 0.5 to 1.5% by weight of silicon; 3 to 4.5% by weight of aluminum, 0.5 to 1.5% by weight of iron, 2 to 4.5% by weight of nickel, and the balance of copper when it is assumed that the whole copper alloy constituting the matrix is 100% by weight.

**7.** (Amended) The nonleaded free-machining copper alloy extruded material according to claim 1, wherein
a copper alloy constituting a matrix contains 55 to 65% by weight of copper, 0.2 to 7.5% by weight of aluminum, 0.1 to 4% by weight of iron, 0.5 to 5% by weight of manganese, and the balance of zinc when it is assumed that the whole copper alloy constituting the matrix is 100% by weight.

**8.** (Amended) The nonleaded free-machining copper alloy extruded material according to claim 1, wherein
a copper alloy constituting a matrix contains 55 to 64% by weight of copper, 0.1 to 0.7% by weight of iron, 0.2 to 2.5% by weight of tin, and the balance of zinc when it is assumed that the whole copper alloy constituting the matrix is 100% by weight.

**9.** (Amended) The nonleaded free-machining copper alloy extruded material according to claim 1, wherein
a copper alloy constituting a matrix contains one or more kinds of elements selected from a group consisting of 0.1 to 1.5% by weight of titanium, 0.1 to 1.5% by weight of chrome, and 0.1 to 1.5% by weight of cobalt.

**10.** (Amended) The nonleaded free-machining copper alloy extruded material according to claim 1, wherein
a copper alloy constituting a matrix further contains one or more kinds of elements selected from a group consisting of 0.02 to 4% by weight of bismuth, 0.02 to 0.4% by weight of tellurium, 0.02 to 0.4% by weight of selenium, and 0.02 to 0.15% by weight of antimony.

**11.** (Amended) The nonleaded free-machining copper alloy extruded material according to claim 1, wherein
the grain diameter of said powder particle is 5 µm to 300 µm.

**12.** (Deleted)

**13.** (Deleted)

**14.** (Amended) A nonleaded free-machining copper alloy extruding billet for obtaining the nonleaded free-machining copper alloy extruded material according to claim 1, wherein
said billet is manufactured by compacting and molding mixed powder of copper alloy powder and a machinability implement element powder particle.

**15.** (Amended) A nonleaded free-machining copper alloy member provided by drawing or hot casting the nonleaded free-machining copper alloy extruded material according to claim 1.

**16.** (Amended) A manufacturing method of a nonleaded free-machining copper alloy extruded material, comprising:
a step of mixing copper alloy powder constituting a matrix and a machinability implement element powder particle to be replaced with a lead component and compacting the mixed powder to manufacture a copper alloy powder solidified billet; and
a step of extruding said billet at a extrusion ratio of 20 to 500 to manufacture an extruded material.

**17.** (Deleted)

**18.** (Amended) The manufacturing method of the nonleaded free-machining copper alloy extruded material according to claim 16, wherein
said machinability implement element powder particle is at least one kind of powder particle selected from a group consisting of graphite, boron nitride, molybdenum disulfide, copper sulfide and calcium fluoride.

**19.** (Amended) The manufacturing method of the nonleaded free-machining copper alloy extruded material according to claim 18, wherein
the additive amount of said powder particle is 0.1 to 3% by weight, to 100% by weight of said copper alloy powder.

**20.** (Amended) The manufacturing method of the nonleaded free-machining copper alloy extruded material according to claim 18, wherein
the grain diameter of said powder particle is 5 µm to 300 µm.

**21.** (Amended) The manufacturing method of the nonleaded free-machining copper alloy extruded material according to claim 16, wherein
said billet is heated at temperature within a range of 400°C to 800°C to perform said extruding step.

The following amendment was made for claims in order to clearly define the characteristics of the present invention.
The original claims 1, 2, and 12 were combined to be the amended claim 1.
The original claims 16 and 17 were combined to be the amended claim 16.
The original claims 2, 12, 13 and 17 were deleted.
"Nonleaded free-machining copper alloy" was defined in all the claims.
